# EUROPÄISCHE PATENTSCHRIFT

(11) **EP 0 388 669 B1**
(45) Veröffentlichungstag und Bekanntmachung des Hinweises auf die Patenterteilung: **12.05.1993**
(21) Anmeldenummer: 90103853.9
(22) Anmeldetag: 28.02.1990
(51) Int. Cl.: F16C 33/61, F16C 19/38

(54) **Mittenfreie Rollendrehverbindung**
Roller bearing with a free space in its centre
Palier à contact de roulement muni d'un espace libre en son centre

(30) Priorität: 23.03.1989 DE 3909664; 23.12.1989 DE 3942847
(43) Veröffentlichungstag der Anmeldung: 26.09.1990
(73) Patentinhaber: Fried. Krupp AG Hoesch-Krupp, 44145 Dortmund (DE)
(72) Erfinder: Siemensmeyer, Heinrich, Dipl.-Ing., D-4600 Dortmund 50 (DE)

(56) Entgegenhaltungen:
- EP-A- 0 301 186
- DE-A- 2 011 141
- DE-C- 2 734 916
- DE-U- 1 879 514
- FR-A- 2 368 634
- GB-A- 2 083 572

## Beschreibung

Die Erfindung betrifft eine mittenfreie Rollendrehverbindung nach dem Oberbegriff des Anspruches 1.

Derartige mittenfreie Rollendrehverbindungen dienen dazu, beispielsweise bei Kranen, Baggern oder auch Tunnelbohrmaschinen große Kräfte eines drehenden Teils auf ein stehendes Teil zu übertragen. Dabei sind Durchmesserabmessungen von mehreren Metern üblich.

Die DE-A-2 011 141 zeigt eine derartige Rollendrehverbindung. Bekanntermaßen sind die Laufflächen der Lagerringe, auf denen die Mäntel der Rollen abwälzen, gehärtet. Das bringt bei großen Abmessungen Schwierigkeiten durch die durch Wärmezufuhr bzw. Abschreckung bei der Wärmebehandlung hervorgerufenen Verzüge bzw. Verwerfungen dieses Lagerringes, insbesondere, wenn am scheibenförmig ungeteilten Nasenring noch zusätzlich eine gehärtete Verzahnung vorgesehen ist. Die DE-C-2 734 916 befaßt sich mit den Schwierigkeiten des Härtens der Nase und zeigt Lösungswege auf, hier Abhilfe zu schaffen. Eine Lösung bei der Ausbildung des Nasenringes mit gehärteter Verzahnung wird nicht aufgezeigt.

Von daher liegt der Erfindung die Aufgabe zugrunde, eine mittenfreie Rollendrehverbindung der beschriebenen Gattung derart weiterzubilden, daß gehärtete Laufflächen an der Nase des scheibenförmig ungeteilten Ringes vorgesehen werden können, ohne daß es durch die Härtemaßnahmen zu hohen Verzügen an diesem Lagerring kommt. Weiterhin soll erreicht werden, daß nach dem Härten einer Verzahnung an diesem Ring nur geringe oder gar keine Nacharbeit an den Laufflächen erforderlich wird.

Zwar ist es nach dem DE-U-1 879 514 bekannt, bei einer mittenfreien Rollendrehverbindung der beschriebenen Gattung bei allen Laufflächen Laufdrähte einzusetzen. Diese sollten jedoch dazu dienen, eine einfach Wiederherstellung verschlissener Laufbahnen zu ermöglichen. Nachteilig bei dieser Bauform gestaltet sich der U-förmig umgreifende Lagerring äußerst voluminös, was nicht nur zu einer wesentlichen Verteuerung des Lagers führt, sondern durch sein hohes Gewicht und das dementsprechend große Bauvolumen der Anschlußkonstruktion auch technische Nachteile bringt. Damit kann diese Ausbildung nicht die vorteilhaften Funktionen einer mittenfreien Rollendrehverbindung nach der DE-A-2 011 141 erfüllen.

Auch die GB-A-2 083 572 zeigt dem Fachmann keinen Weg zur Lösung der gestellten Aufgabe. Die hier gezeigte Rolldrehverbindung sieht zwar vor, ausschließlich bei den stark belasteten Laufbahnen Laufdrähte einzusetzen. Nach dieser Veröffentlichung werden die sich jeweils gegenüber liegenden Laufbahnen des mit einer Nase ausgebildeten Lagerringes und des ihn U-förmig umgreifenden Lagerringes durch eingesetzte Laufdrähte gebildet. Das führt weiterhin zu Härteverzügen und großen Lagerquerschnitten.

Die vorbeschriebene Aufgabe wird erst durch die im kennzeichnenden Teil des Anspruchs 1 angegebenen Merkmale gelöst.

Vorteilhafte Ausbildungen des Erfindungsgegenstandes werden in den Ansprüchen 2 bis 5 beschrieben.

Die mit der Erfindung erzielten Vorteile bestehen insbesondere darin, daß eine mittenfreie Rollendrehverbindung mit dem Vorteil des geringen Bauvolumens eines gehärteten Lagers derart ausgebildet ist, daß eine einfach Fertigung und eine sichere Funktion der Nase des scheibenförmig ungeteilten Ringes erreicht wird, insbesondere wenn dieser Ring mit einer gehärteten Verzahnung ausgebildet ist. Ein Nachverzahnen der gehärteten Verzahnung kann entfallen. Bei der Ausbildung der Laufdrähte mit konvexen Rücken wird darüber hinaus die vorteilhafte Wirkung erzielt, daß Abwinklungen und Schrägstellungen der Laufbahnen des U-förmig umgreifenden Ringes nicht zu Kantenpressungen an den Rollen führen, so daß auch in diesen Einsatzfällen kein erhöhter Verschleiß und kein erhöhter Drehwiderstand auftritt. Durch diese Maßnahme kann der U-förmig umgreifende Lagerring zusätzlich mit einem verringerten Volumen ausgebildet werden, da eine elastische Nachgiebigkeit ausgeglichen wird. Die Teilung der Laufdrähte am Umfang ermöglicht eine einfachere Spieleinstellung und eine bessere Herstellung Montage. Darüber hinaus ergibt sich bei segmentförmig geteilten Lagerringen der Vorteil geringerer Verzüge in bezug auf die Krümmung und das Sehnenmaß.

Ausführungsbeispiele der Erfindung sind in der Zeichnung dargestellt und werden im folgenden näher beschrieben.

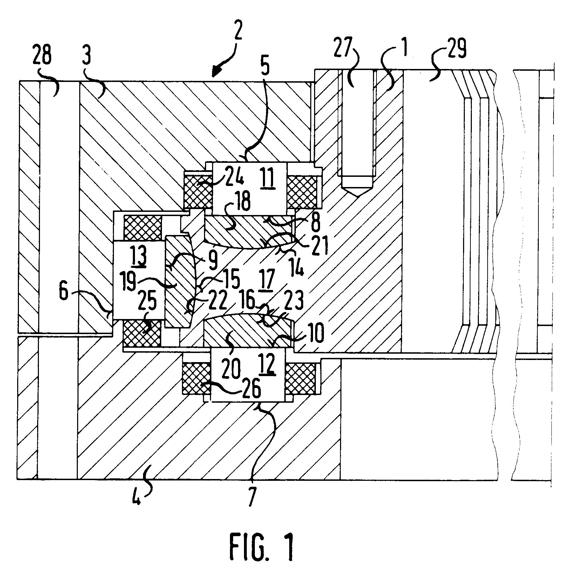

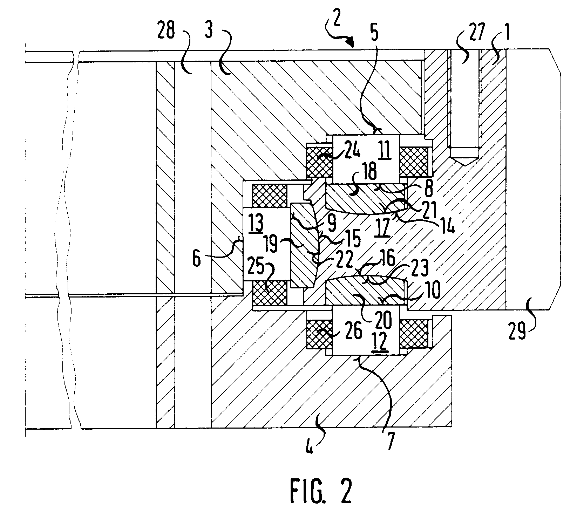

Es zeigen Fig. 1 eine mittenfreie Rollendrehverbindung im Halbschnitt, Fig. 2 eine andere mittenfreie Rollendrehverbindung im Halbschnitt.

In der Fig. 1 sind der innere Lagerring als einteiliger Lagerring 1 und der äußere Lagerring als u-förmiger Lagerring 2 ausgebildet, wogegen in der Fig. 2 der äußere Lagerring als einteiliger Lagerring 1 und der innere Lagerring als u-förmiger Lagerring 2 ausgebildet sind. Wie aus den Fig. 1 und 2 hervorgeht, ist die Nase 17 des einteiligen Lagerringes 1 durch einen U-förmigen Lagerring 2 umfaßt, der aus zwei scheibenförmig aufeinander liegenden Teilringen 3, 4 gebildet ist. Zwischen den gehärteten Laufbahnen 5, 6, 7, 8, 9, 10 sind zwei Axiallasten übertragende Rollenreihen 11, 12 und eine Radiallasten übertragende Rollenreihe 13 angeordnet.

In den Ausnehmungen 14, 15, 16 der Nase 17 des einteiligen Lagerringes 1 sind Laufdrähte 18, 19, 20 angeordnet. Die Rücken 21,-22, 23 dieser Laufdrähte 18, 19, 20 sind konvex ausgebildet und liegen in den kongruent konkav ausgebildeten Ausnehmungen 14,-15, 16. Die Laufdrähte 18, 19, 20 sind vorzugsweise über den gesamten Querschnitt gehärtet. Die Rollenreihen 11, 12, 13 werden durch Käfige 24, 25, 26 geführt. Die Verbindung der Rollendrehverbindung mit einer nicht dargestellten drehenden bzw. nichtdrehenden Anschlußkonstruktion erfolgt durch Verschrauben. Dazu sind im einteiligen Lagerring 1 entsprechende Gewindelöcher 27 und im U-förmigen Lagerring 2 Bohrungen 28 vorgesehen. Am Innen- bzw. Außendurchmesser des einteiligen Lagerringes 1 ist eine Verzahnung 29 angeordnet.

## Patentansprüche

1. Mittenfreie Rollendrehverbindung mit einem ring- und scheibenförmig ungeteilten Lagerring (1) mit einer sich radial erstreckenden Nase (17) und einem diese Nase U-förmig umgreifenden mehrteiligen Lagerring (2), zwischen denen auf jeweils gehärteten Laufbahnen (5, 6, 7, 8, 9, 10), die als Laufdrähte (18, 19, 20) ausgebildet und in Ausnehmungen (14, 15, 16) der Lagerringe (1, 2) eingesetzt sein können, zwei Axiallasten übertragende Rollenreihen (11, 12) und eine Radiallasten übertragende Rollenreihe (13) angeordnet sind, dadurch gekennzeichnet, daß ausschließlich an der Nase (17) des ring- und scheibenförmig ungeteilten Lagerringes (1) als Laufbahnen (8, 9, 10) gehärtete Laufdrähte (18, 19, 20) eingesetzt sind.

2. Mittenfreie Rollendrehverbindung nach Anspruch 1, dadurch gekennzeichnet, daß die von den Rollenreihen (11, 12, 13) abgewandten Rücken (21, 22, 23) der Laufdrähte (18, 19, 20) in kongruent geformten Ausnehmungen (14, 15, 16) der Nase (17) liegen.

3. Mittenfreie Rollendrehverbindung nach Anspruch 2, dadurch gekennzeichnet, daß konvex ausgebildete Rücken (21, 22, 23) der Laufdrähte (8, 9, 10) in kongruent konkav ausgebildeten Ausnehmungen (14, 15, 16) der Nase (17) liegen.

4. Mittenfreie Rollendrehverbindung nach den Ansprüchen 1 bis 3, dadurch gekennzeichnet, daß die Laufdrähte (18, 19, 20) ein- oder mehrfach am Umfang geteilt ausgebildet sind.

5. Mittenfreie Rollendrehverbindung nach einem oder mehreren der Ansprüche 1 bis 4, dadurch gekennzeichnet, daß mindestens ein Lagerring (1, 2) segmentförmig geteilt ist.

## Claims

1. Roller rotary connection with a free space in its centre having an annular and disc-shaped one-piece bearing ring (1) having a radially extending lug (17) and a multiple-part bearing ring (2) enveloping said lug in a U-shaped manner, between which there are arranged on respective hardened running paths (5, 6, 7, 8, 9, 10) which are formed as running wires (18, 19, 20) and can be inserted in the recesses (14, 15, 16) of the bearing rings (1,2), two roller rows (11, 12) which transmit axial loads and one roller row (13) which transmits radial loads, characterised in that hardened running wires (18, 19, 20) are used as running paths (8, 9, 10) exclusively on the lug (17) of the annular and disc-shaped one-piece bearing ring (1).

2. Roller rotary connection with a free space in its centre according to claim 1, characterised in that the backs (21, 22, 23) of the running wires (18,19,20) remote from the roller rows (11, 12, 13) lie in congruently formed recesses (14, 15, 16) of the lug (17).

3. Roller rotary connection with a free space in its centre according to claim 2, characterised in that convex shaped backs (21, 22, 23) of the running wires (8, 9, 10) lie in congruently concave shaped recesses (14, 15, 16) of the lug (17).

4. Roller rotary connection with a free space in its centre according to claims 1 to 3, characterised in that the running wires (18, 19, 20) are divided once or several times on the periphery.

5. Roller rotary connection with its free space in its centre according to one or more of the claims 1 to 4, characterised in that at least one bearing ring (1,2) is divided in a segmental manner.

## Revendications

1. Palier de roulement à centre libre, comprenant une bague de palier (1) non divisée, formant bague et disque, comportant un ressaut (17) qui s'étend radialement, et une bague de palier (2) en U, en plusieurs parties, qui entoure ce ressaut, entre lesquels éléments sont agencées, sur des voies de roulement durcies respectives (5, 6, 7, 8, 9, 10), qui peuvent avoir la forme de fils de roulement (18, 19, 20), et être insérées dans des évidements (14, 15, 16) des bagues de palier (1, 2), deux séries de rouleaux supportant des charges axiales (11, 12) et une série de rouleaux supportant des charges radiales (13), caractérisé en ce que des fils de roulement durcis (18, 19, 20) sont prévus comme voies de roulement (8, 9, 10) exclusivement sur le ressaut (17) de la bague de palier (1) non divisée, forment bague et disque.

2. Palier de roulement à centre libre, selon la revendication 1, caractérisé en ce que les parties arrière (21, 22, 23) des fils de roulement (18, 19, 20) qui se trouvent à l'opposé des séries de rouleaux (11, 12, 13) sont disposées dans des évidements 114, 15, 16) de forme correspondante du ressaut (17).

3. Palier de roulement à centre libre, selon la revendication 2, caractérisé en ce que les parties arrière de forme convexe (21, 22, 23) des fils de roulement (8, 9, 10) sont disposées dans des évidements (14, 15, 16) de forme concave correspondante du ressaut (17).

4. Palier de roulement à centre libre, selon les revendications 1 à 3, caractérisé en ce que les fils de roulement (18, 19, 20) sont réalisés en une ou plusieurs pièces dans le sens de la périphérie.

5. Palier de roulement à centre libre, selon une ou plusieurs des revendications 1 à 4, caractérisé en ce qu'au moins une bague de palier (1, 2) est partagée en segments.
